# EUROPÄISCHE PATENTSCHRIFT

(11) **EP 1 928 720 B1**
(45) Veröffentlichungstag und Bekanntmachung des Hinweises auf die Patenterteilung: **27.10.2010**
(21) Anmeldenummer: 06792773.1
(22) Anmeldetag: 10.08.2006
(51) Int. Cl.: B60W 40/04

(54) **VERFAHREN UND VORRICHTUNG ZUR UNTERSTÜTZUNG EINES EINPARKVORGANGS EINES FAHRZEUGS**
METHOD AND DEVICE FOR PROVIDING ASSISTANCE DURING A PARKING MANOEUVRE OF A VEHICLE
PROCEDE ET DISPOSITIF D'ASSISTANCE AU STATIONNEMENT D'UN VEHICULE

(30) Priorität: 16.09.2005 DE 102005044270
(43) Veröffentlichungstag der Anmeldung: 11.06.2008
(73) Patentinhaber: ROBERT BOSCH GMBH, 70442 Stuttgart (DE)
(72) Erfinder: FABER, Petko, 71229 Leonberg (DE)
(86) Internationale Anmeldenummer: PCT/EP2006/065230
(87) Internationale Veröffentlichungsnummer: WO 2007/031379

(56) Entgegenhaltungen:
- WO-A-2005/009787
- DE-A1- 10 045 616
- DE-A1- 10 257 722
- JP-A- 2002 154 396

## Beschreibung

### Stand der Technik

Die Erfindung betrifft ein Verfahren zur Unterstützung eines Einparkvorgangs eines Fahrzeugs, insbesondere eines Kraftfahrzeugs, in eine Parklücke, wobei während eines Vorbeifahrens des Fahrzeugs an der Parklücke die Parklücke und ein im Bereich der Parklücke angeordnetes Begrenzungsobjekt mittels einer Sensoranordnung erfasst werden. Außerdem betrifft die Erfindung eine Vorrichtung, insbesondere zur Ausführung eines vorgenannten Verfahrens, zur Unterstützung eines Einparkvorgangs eines Fahrzeugs, insbesondere für ein Kraftfahrzeug, in eine Parklücke mit einer Sensoranordnung zum Erfassen einer Parklücke und eines im Bereich der Parklücke angeordneten Begrenzungsobjektes bei einem Vorbeifahren des Fahrzeugs an der Parklücke, mit einer mit der Sensoranordnung verbundenen Auswerteeinheit und mit einer Speichereinheit.

Ein oben genanntes Verfahren ist zum Beispiel aus einem als Parklückenlokalisierung, für die eine andere Bezeichnung Parking Space Localization (PSL) ist, bekannten Verfahren, das einen Fahrer als Benutzer eines Kraftfahrzeugs bei einer Suche nach einer für sein Fahrzeug hinsichtlich ihrer geometrischen Abmessungen ausreichend großen Parklücke unterstützt, als dessen Bestandteil geläufig. Die Parklückenlokalisierung kann mit einer Einrichtung zu einem semiautonomen Einparken zusammenarbeiten, bei der der Fahrer Fahr- und Bremspedal des Fahrzeugs bedienen muss, wohingegen ein Lenken des Fahrzeugs entweder durch den Fahrer oder automatisch ausgeführt werden kann. Eine eingangs genannte Vorrichtung kann beispielsweise eine solche, vorgenannte Einrichtung sein, die das Kraftfahrzeug in eine ausgewählte Parklücke führt und unter der Bezeichnung semiautonomer Einparkassistent (SPA, semi-autonomous parking assistant) bekannt ist. Der semiautonome Einparkassistent berechnet eine geeignete Bahnkurve für das Einparken des Fahrzeugs in die Parklücke und informiert den Fahrer, zum Beispiel mit Hilfe von akustischen Signalen, über die Aktionen, die er auszuführen hat, um das Fahrzeug einwandfrei in der Parklücke abzustellen. Ein Grundsatz dabei ist, dass das Fahrzeug Begrenzungsobjekte bildende vordere, hintere und seitliche Parklückenbegrenzungen nicht überfahren darf. Hierzu ist gegebenenfalls auch ein auf eigener Wahrnehmung und Entscheidung fußendes Eingreifen des Fahrers erforderlich.

Weiterhin ist aus DE 102 57 722 A1 eine Einparkhilfe für ein Fahrzeug bekannt, wobei eine Messeinheit zur Erfassung von Parklücken bei einer Vorbeifahrt des Fahrzeugs an den Parklücken vorgesehen ist. Die Einparkhilfe weist eine Speichereinheit zur Speicherung von Eigenschaften der Parklücken sowie eine Ausgabeeinheit zur Ausgabe von Informationen zu den Parklücken auf. Die Ausgabeeinheit kann eine Anzeigefläche aufweisen, und es sollen bevorzugt nur solche Parklücken in der Anzeigefläche angezeigt werden, die aufgrund ihrer Größe zum Einparken des Fahrzeugs überhaupt geeignet sind. Vorzugsweise sollen ungeeignete Parklücken in der Anzeige unterdrückt und ihre Daten aus der Speichereinheit gelöscht werden. Eine Differenzierung hinsichtlich möglicher Begrenzungsobjekte der Parklücke erfolgt nicht.

Aus DE 100 45 616 A1 ist ein Verfahren zum automatischen Einparken eines Kraftfahrzeugs, wobei eine Parklücke ausgemessen, eine Einparkstrategie errechnet und einem Fahrer des Kraftfahrzeugs mitgeteilt werden soll, bekannt. Mittels einer Videokamera wird bei diesem Verfahren die Umgebung des Fahrzeugs aufgenommen und auf einem Bildschirm dargestellt. Durch Berühren des Bildschirms soll der Fahrer eine gewünschte anzufahrende Parklücke auswählen können.

Weiterhin ist aus der WO 2005/009787 A ein Verfahren zur Unterstützung eines Einparkvorgangs eines Fahrzeugs in eine Parklücke bekannt, bei dem während eines Vorbeifahrens des Fahrzeugs an der Parklücke ein im Bereich der Parklücke angeordnetes Begrenzungsobjekt erfasst wird. Darüber hinaus ist aus der JP 2002-154396 A eine weitere Einparkhilfe bekannt, bei der Begrenzungsobjekte erfasst und klassifiziert werden.

Der Erfindung liegt die Aufgabe zugrunde, ein Verfahren der eingangs genannten Art anzugeben, das den Einparkvorgang weiter vereinfacht und zuverlässiger gestaltet. Darüber hinaus liegt der Erfindung die Aufgabe zugrunde, eine Vorrichtung zur einfacheren und zuverlässigeren Durchführung des Einparkvorgangs zu schaffen.

Die erstgenannte Aufgabe wird erfindungsgemäß gelöst mit einem Verfahren der eingangs genannten Art, wobei dem erfassten Begrenzungsobjekt ein Begrenzungsobjekttyp zugeordnet wird und wobei in Abhängigkeit von dem zugeordneten Begrenzungsobjekttyp und einer Lage des Begrenzungsobjektes im Bereich der Parklücke eine Einparkinformation bezüglich einer Ausführbarkeit eines Einparkvorgangs in die Parklücke generiert wird.

Die oben zweitgenannte Aufgabe wird erfindungsgemäß gelöst mit einer Vorrichtung der eingangs genannten Art, wobei in der Speichereinheit Begrenzungsobjekttypen hinterlegt sind und wobei mittels der Auswerteeinheit eine Einparkinformation bezüglich einer Ausführbarkeit eines Einparkvorgangs in die Parklücke in Abhängigkeit von einer Zuordnung eines der hinterlegten Begrenzungsobjekttypen zu dem erfassten Begrenzungsobjekt und von einer Lage des Begrenzungsobjektes im Bereich der Parklücke generierbar ist.

### Vorteile der Erfindung

Die Erfindung eignet sich allgemein für Fahrzeuge. Sie lässt sich aufgrund des in zunehmend geringerem Maße zur Verfügung stehenden Parkraumes insbesondere im öffentlichen Verkehrsraum aber besonders gut für Kraftfahrzeuge, und zwar sowohl für Personenkraftwagen als auch für Nutzkraftwagen, verwenden. Vorzugsweise ist die Erfindung Bestandteil eines semiautonomen Einparkassistenten eines Kraftfahrzeugs. Mit dem erfindungsgemäßen Verfahren wird durch eine Unterscheidung des Begrenzungsobjektes hinsichtlich verschiedener Begrenzungsobjekttypen und gleichzeitige Berücksichtigung der geometrischen Lage, das heißt der geometrischen Koordinaten des Begrenzungsobjektes im Bereich der Parklücke vorteilhaft eine Einparkinformation erzeugt, die eine qualitative Aussage über die Parklücke enthält. Auf diese Weise kann die Einparkinformation, die in einem einfachen Fall eine der beiden Angaben "Einparken möglich" oder "Einparken nicht möglich" umfasst, zum Beispiel berücksichtigen, dass ein Begrenzungsobjekt vom Typ Baum als vordere Parklückenbegrenzung akzeptiert wird, als hintere Parklückenbegrenzung aber nicht zulässig oder nur bei einer erheblich größeren Parklückenlänge als der Fahrzeuglänge zulässig ist, um einen Zugang zu einem Kofferraum des Fahrzeugs nicht zu behindern; nach einem anderen Beispiel kann mit der Erfindung berücksichtigt werden, dass ein die Parklücke mittig kreuzender Bordstein, der grundsätzlich kein unüberwindbares Hindernis für das Fahrzeug darstellt, zu einer mangelnden Eignung der Parklücke führt, wenn das Fahrzeug Räder mit beschädigungsempfindlichen Leichtmetallfelgen aufweist. Zusätzlich zu aus dem Stand der Technik allein bekannter quantitativer Prüfung der Parklücke, die lediglich auf die geometrischen Abmessungen der Parklücke abstellt, gewährleistet die Erfindung demgegenüber eine Beachtung weiterer, die Parklücke betreffender Umstände, insbesondere eine Berücksichtigung der Topographie der Parklücke; die Erfindung berücksichtigt vorteilhaft somit auch die qualitative Ausgestaltung der Parklücke. Mit der Erfindung wird die gesamte die Parklücke umfassende Parkszene interpretiert, und aufgrund der Interpretation kann nachfolgend entschieden werden, ob eine potentielle Parklücke für einen Einparkvorgang tatsächlich geeignet ist oder nicht. Der Bereich der Parklücke, in dem Begrenzungsobjekte erfindungsgemäß berücksichtigt werden, umfasst nicht nur die Parklücke im engeren Sinne, das heißt die von dem Fahrzeug nach dem Einparken unmittelbar beanspruchte Stellfläche, sondern auch deren unmittelbare Umgebung einschließlich der Parklückenbegrenzungen. Die Bezeichnung Begrenzungsobjekt bedeutet dabei allgemein, dass es sich um ein Objekt handelt, das potentiell geeignet ist, einen Einparkvorgang in die Parklücke einzuschränken oder zu beschränken; es muss sich dementsprechend nicht zwangsläufig um ein Objekt handeln, welches eine Parklückenbegrenzung im geometrischen Sinne, zum Beispiel eine seitliche Mauer, darstellt. Verschiedene, vorgegebene Begrenzungsobjekttypen können beispielsweise in einer Speichereinheit, wie sie in der erfindungsgemäßen Vorrichtung vorgesehen ist, hinterlegt sein. Dabei können Anzahl und Art von Begrenzungsobjekttypen grundsätzlich beliebig sein, zum Beispiel können als Begrenzungsobjekttypen in Frage kommen: Personenkraftwagen, Lastkraftwagen, Zweirad, Baum, Busch, Strauch, Hecke, Pfosten, Lampenmast, Bordstein, Gullydeckel, Mauer, Zaun, Geländer, Baumaterial, Baugrube, Briefkasten, Mülltonne, Litfaßsäule, Gebäude, Baumschutzbügel, Fahrradständer, Blumenkübel, Verkehrsinsel, Person. Vorzugsweise ist ein Katalog an vorgesehenen, in der Speichereinheit hinterlegten Begrenzungsobjekttypen veränderbar und ergänzbar. Die Einparkinformation kann beispielsweise in Form eines - gegebenenfalls weiterzubearbeitenden - an die Auswerteeinheit, die zudem vorzugsweise die vorgenannte Speichereinheit umfassen kann, der erfindungsgemäßen Vorrichtung oder eine Anzeigeeinheit in einem Fahrgastraum des Fahrzeugs weitergeleiteten Signals vorliegen, wobei die Einparkinformation im einfachsten Fall, beispielsweise wenn die Parklücke aufgrund des Typs und der Lage des Begrenzungsobjektes als zum Einparken nicht geeignet erscheint, zum Beispiel auch darin bestehen kann, dass kein Signal vorliegt. Insgesamt erhöhen sowohl das Verfahren als auch die Vorrichtung nach der Erfindung die Zuverlässigkeit und Präzision der Unterstützung des Einparkvorgangs. Vergebliche und nicht zum vorgesehenen Ziel führende Einparkversuche werden mit der Erfindung ausgeschlossen sowie Fahrzeug und Benutzer, insbesondere Fahrer, des Fahrzeugs bestmöglich geschont. Eine Meldung nicht brauchbarer Parklücken, die lediglich aufgrund ihrer geometrischen Abmessungen einem ersten Anschein nach zum Einparken geeignet erscheinen könnten, an den Fahrer wird mit der Erfindung vermieden.

Die Einparkinformation kann vorteilhaft weiter präzisiert werden, wenn der Bereich der Parklücke in mehrere Segmente unterteilt wird und wenn für jedes Segment eine Zuordnung eines Begrenzungsobjekttyps zu einem in dem Segment erfassten Begrenzungsobjekt erfolgt.

Dabei ist es von besonderem Vorteil für eine umfassende Information über die Parklücke bei gleichzeitig noch vergleichsweise geringem Erfassungs- und Verarbeitungsaufwand, wenn der Bereich der Parklücke in eine Anordnung von 3 x 3 Segmenten unterteilt wird. Eine solche Anordnung lässt sich für eine einfache weitere Bearbeitung beispielsweise durch eine 3x3-Matrix abbilden. Das mittlere, zentrale Segment umfasst vorzugsweise die eigentliche, den potentiellen Stellplatz bildende Parklücke, und die umliegenden acht Segmente beinhalten die vordere, hintere und seitlichen Parklückenbegrenzungen einschließlich der Parklückenbegrenzungsecken.

Für einen besonders hohen Informationsgehalt und eine zusätzliche Präzisierung der Einparkinformation ist es vorteilhaft, wenn ein alle Segmente mit jeweils zugeordnetem Begrenzungsobjekttyp umfassendes Parklückenmuster der Parklücke mit zulässigen Parklückenmustern verglichen wird und wenn in Abhängigkeit des Vergleichs des Parklückenmusters mit den zulässigen Parklückenmustern die Einparkinformation generiert wird. Die zulässigen Parklückenmuster sind vorzugsweise in der Speichereinheit hinterlegt. In einfacher Weise beschrieben werden können die Parklückenmuster beispielsweise jeweils durch eine Ziffernfolge, wobei eine Position in der Ziffernfolge ein jeweils zugeordnetes Segment des Bereichs der Parklücke und eine an der Position stehende Ziffer den Begrenzungsobjekttyp eines in dem Segment angeordneten Begrenzungsobjektes angibt. Die zulässigen Parklückenmuster können vorzugsweise in Form einer Nachschlagetabelle, die alle denkbaren zulässigen Parklückenmuster umfasst, in der Speichereinheit hinterlegt sein. Das ist insbesondere dann von Vorteil, wenn trotz einer vergleichsweise großen Anzahl möglicher Begrenzungsobjekttypen die Anzahl möglicher Interpretationen einer Parkszene vergleichsweise klein ist.

Das erfindungsgemäße Verfahren ist besonders gut und selbsttätig zum Beispiel an sich ändernde Umgebungsbedingungen anpassbar, wenn ein alle Segmente mit jeweils zugeordnetem Begrenzungsobjekttyp umfassendes Parklückenmuster der Parklücke mit zulässigen Relationen von Begrenzungsobjekttypen mehrerer im Bereich der Parklücke erfasster Begenzungsobjekte zueinander verglichen wird und wenn in Abhängigkeit des Vergleichs des Parklückenmusters mit den zulässigen Relationen von Begrenzungsobjekttypen die Einparkinformation generiert wird. Damit kann zudem auf eine Hinterlegung einer lediglich begrenzten Anzahl zulässiger Parklückenmuster in der Speichereinheit verzichtet werden. Vorteilhaft ist eine Verwendung von definierten Regeln, die die zulässigen Relationen beschreiben, wenn eine Vergrößerung der Menge zulässiger Begrenzungsobjekttypen erforderlich und/oder gewünscht ist. Eine Interpretation einer Parkszene kann in der Weise erfolgen, dass von einer durch ein n-Tupel [A, K] beschriebenen Anordnung ausgegangen wird, wobei A die Menge aller erfassten Begenzungsobjekte ist und K die Menge der Relationen zwischen den Elementen der Menge A. A beschreibt dabei die Beziehungen der Begrenzungsobjekte hinsichtlich einer kontextuellen Beeinflussung der einzelnen Begrenzungsobjekte untereinander. Durch die Menge K der Relationen werden die möglichen, vorzugsweise parametrierbaren, Kombinationen von Zuordnungen der Begrenzungsobjekte zu den möglichen Interpretationen (geeignet/nicht geeignet für einen Einparkvorgang) bewertet. Dabei ist in einem ersten Schritt die Menge der Begrenzungsobjekttypen zu spezifizieren, welche als longitudinale Begrenzung einer Parklücke und welche als laterale Begrenzung der Parklücke zulässig sind.

Eine freizügige Anpassung an individuelle Wünsche und Erfordernisse eines Benutzers des Fahrzeugs lässt sich vorteilhaft dadurch erreichen, dass vor dem Erfassen der Parklücke zumindest ein Teil eines zulässigen Parklückenmusters von einem Benutzer des Fahrzeugs vorgegeben wird. Der Benutzer kann ein vollständiges Parklückenmuster vorgeben oder sich auf für ihn besonders wichtige Angaben beschränken, zum Beispiel eine Eignung einer Parklücke bei Vorhandensein einer Hecke in einem eine fahrzeugslängsseitige Parklückenbegrenzung abdeckenden Segment ausschließen, um beispielsweise ein Zerkratzen seines Fahrzeugs beim Einparken zu vermeiden; gleichzeitig kann eine Hecke als vordere und/oder hintere Parklückenbegrenzung aber zugelassen werden.

Es ist vorstellbar, dass die generierte Einparkinformation beispielsweise lediglich in der Auswerteeinheit zur weiteren Verarbeitung und Unterstützung des Einparkvorgangs verwendet wird. Hingegen ist es von besonderem Vorteil für eine umfassende Mitteilung von Einparkmöglichkeiten an den Benutzer des Fahrzeugs, wenn die Einparkinformation dem Benutzer des Fahrzeugs übermittelt wird. Die Übermittlung kann vorzugsweise optisch und/oder akustisch erfolgen.

Vorteilhaft wird ausgehend von der Einparkinformation eine Einparkbahn in die Parklücke, insbesondere mittels der Auswerteeinheit, bestimmt. Bei Nichteignung der Parklücke zum Einparken besteht die Bestimmung der Einparkbahn regelmäßig darin, dass keine Einparkbahn bestimmt wird, wobei dem Benutzer des Fahrzeugs dieser Umstand zusätzlich über ein Ausgabemittel mitgeteilt werden kann.

Von Vorteil für eine leichte Bedienbarkeit der erfindungsgemäßen Vorrichtung und eine Anpassung der Vorrichtung an individuelle Wünsche und Bedürfnisse eines Benutzers ist es, wenn ein Eingabemittel zur Eingabe zumindest eines Teils eines zulässigen Parklückenmusters in die Speichereinheit durch einen Benutzer des Fahrzeugs vorgesehen ist. Das Eingabemittel kann zum Beispiel eine Tastatur und/oder einen Bildschirm mit Berührungseingabe und/oder ein Spracheingabegerät umfassen.

Vorzugsweise ist für eine umfassende Information des Benutzers des Fahrzeugs ein Ausgabemittel, welches beispielsweise einen Bildschirm und/oder einen Lautsprecher umfassen kann, zur Übermittlung der Einparkinformation an den Benutzer des Fahrzeugs vorgesehen.

Für eine hohe Betriebssicherheit bei gleichzeitig kostengünstigem Aufbau der erfindungsgemäßen Vorrichtung ist es von Vorteil, wenn die Sensoranordnung zumindest einen abstandsmessenden Sensor, insbesondere einen Ultraschallsensor, aufweist.

### Zeichnung

Ausführungsbeispiele der Erfindung sind in der Zeichnung schematisiert dargestellt und werden nachfolgend näher beschrieben, wobei sich jeweils entsprechende Elemente in allen Figuren mit gleichen Bezugszeichen versehen sind. Es zeigen
Figur 1 eine erste Einparksituation mit einem Fahrzeug mit einer Vorrichtung zur Unterstützung eines Einparkvorgangs des Fahrzeugs in eine Parklücke,
Figur 2 eine zweite Einparksituation mit einem Fahrzeug und einer Parklücke,
Figur 3 eine dritte Einparksituation mit einem Fahrzeug und einer Parklücke und
Figur 4 eine vierte Einparksituation mit einem Fahrzeug und einer Parklücke.

### Beschreibung der Ausführungsbeispiele

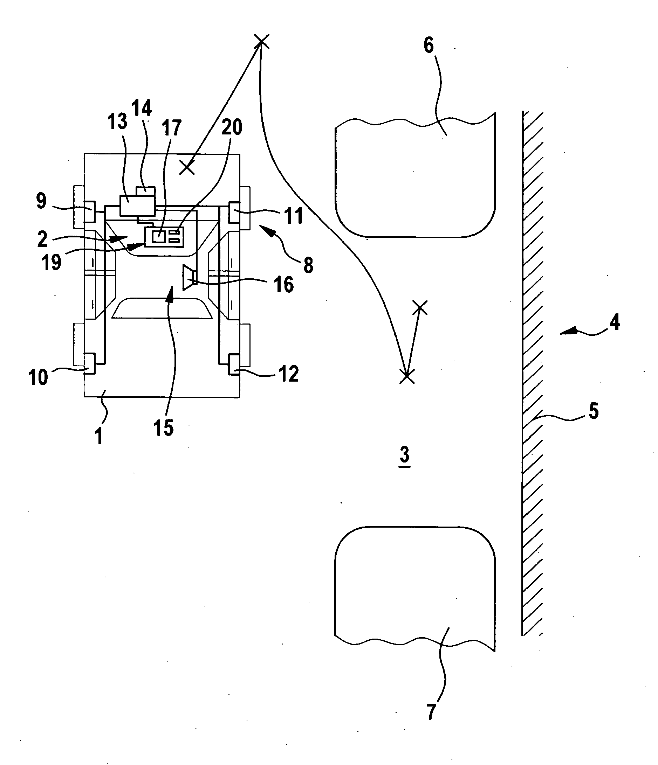

In Figur 1 ist eine Einparksituation mit einem als Personenkraftwagen ausgebildeten Fahrzeug 1 mit einer Vorrichtung 2 zur Unterstützung eines Einparkvorgangs des Fahrzeugs 1 in eine seitlich zu dem Fahrzeug 1 angeordnete Parklücke 3 gezeigt. Im Bereich der Parklücke 3 ist ein erstes, eine seitliche Parklückenbegrenzung bildendes Begrenzungsobjekt 4 angeordnet, welches Begrenzungsobjekt 4 ein Bordstein 5 ist. Darüber hinaus ist im Bereich der Parklücke 3 ein zweites, eine vordere Parklückenbegrenzung bildendes Begrenzungsobjekt 6 und ein drittes, eine hintere Parklückenbegrenzung bildendes Begrenzungsobjekt 7 angeordnet. Bei den beiden letztgenannten Begrenzungsobjekten 6, 7 handelt es sich jeweils um ein bereits an dem Bordstein 5 abgestelltes Kraftfahrzeug.

Die Vorrichtung 2 zur Unterstützung des Einparkvorgangs des Fahrzeugs 1 weist eine Sensoranordnung 8 mit vorzugsweise zwei seitlich an dem Fahrzeug 1 angeordneten, als Ultraschallsensoren ausgebildeten abstandsmessenden Sensoren 9, 11 zur Umfelderfassung des Fahrzeugs 1 auf, wobei diese Sensoren 9, 11 hier im Frontbereich des Fahrzeugs 1 angeordnet sind; zusätzlich und nur ergänzend sind in diesem Ausführungsbeispiel zwei weitere Sensoren 10, 12 im Heckbereich des Fahrzeugs 1 angeordnet. Insbesondere dient die Sensoranordnung 8 zum Erfassen der Parklücke 3 und der im Bereich der Parklücke 3 angeordneten Begrenzungsobjekte 4, 6, 7 bei einem Vorbeifahren des Fahrzeugs 1 an der Parklücke 3. Außerdem ist die Vorrichtung 2 mit einer mit der Sensoranordnung 8 verbundenen Auswerteeinheit 13 und mit einer an der Auswerteeinheit 13 angeordneten Speichereinheit 14 versehen.

In der Speichereinheit 14 sind Begrenzungsobjekttypen zur Klassifizierung der erfassten Begrenzungsobjekte 4, 6, 7 hinterlegt. Mittels der Auswerteeinheit 13 ist eine Einparkinformation bezüglich einer Ausführbarkeit eines Einparkvorgangs des Fahrzeugs 1 in die Parklücke 3 in Abhängigkeit von einer Zuordnung der hinterlegten Begrenzungsobjekttypen zu den erfassten Begrenzungsobjekten 4, 6, 7 und von einer Lage der Begrenzungsobjekte 4, 6, 7 im Bereich der Parklücke 3 generierbar.

Die Vorrichtung 2 zur Unterstützung des Einparkvorgangs des Fahrzeugs 1 in die Parklücke 3 arbeitet dabei in der Weise, dass während des Vorbeifahrens des Fahrzeugs 1 an der Parklücke 3 die Parklücke 3 und die im Bereich der Parklücke 3 angeordneten Begrenzungsobjekte 4, 6, 7 mittels der mit der Auswerteeinheit 13 und der Speichereinheit 14 verbundenen Sensoranordnung 8 erfasst werden. Daraufhin wird jedem der erfassten Begrenzungsobjekte 4, 6, 7 von der Auswerteeinheit 13 einer von in der Speichereinheit 14 hinterlegten Begrenzungsobjekttypen zugeordnet. Anschließend wird mittels der Auswerteeinheit 13 in Abhängigkeit von den zugeordneten Begrenzungsobjekttypen und der jeweiligen Lage der Begrenzungsobjekte 4, 6, 7 im Bereich der Parklücke 3 eine Einparkinformation bezüglich der Ausführbarkeit eines Einparkvorgangs in die Parklücke 3 generiert.

Die generierte Einparkinformation wird einerseits mit Hilfe eines Ausgabemittels 15, das einen Lautsprecher 16 und/oder einen Bildschirm 17 aufweist, akustisch und/oder optisch an einen Benutzer des Fahrzeugs 1, insbesondere einen Fahrer des Fahrzeugs 1, übermittelt. Andererseits dient die Einparkinformation einer Bestimmung einer Einparkbahn 18 des Fahrzeugs 1 in die Parklücke 3 durch die Auswerteeinheit 13. Der Bildschirm 13 ist in einer Bedienkonsole 19 angeordnet, die gemäß diesem Ausführungsbeispiel außerdem Eingabemittel 20 für eine manuelle Bearbeitung des Inhaltes der Speichereinheit 14 umfassen kann.

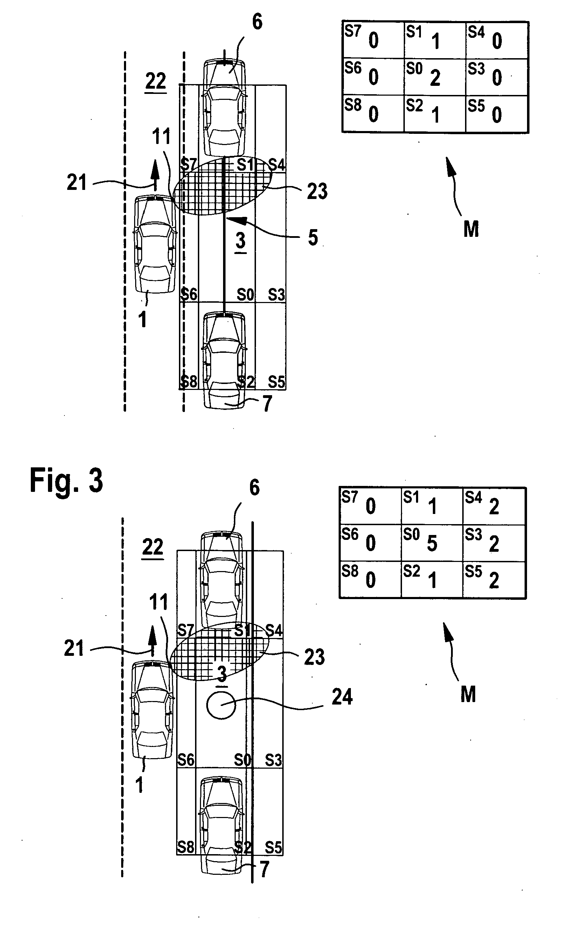

Eine andere beispielhafte Einparksituation ist in Figur 2 dargestellt. Ein dem Fahrzeug 1 nach Figur 1 entsprechendes Fahrzeug 1 mit einer Vorrichtung zur Unterstützung eines Einparkvorgangs des Fahrzeugs 1 fährt in einer durch einen Pfeil 21 gekennzeichneten Vorwärtsrichtung auf einer Fahrbahn 22 an einer Parklücke 3 vorbei. Ein in dem vorderen rechten Eckbereich des Fahrzeugs 1 angeordneter Sensor 11 einer hier nicht weiter dargestellten Sensoranordnung erfasst mit einer Sensorkeule 23 die Parklücke 3 und im Bereich der Parklücke 3 angeordnete Begrenzungsobjekte 4, 6, 7, und zwar als erstes Begrenzungsobjekt 4 einen die Parklücke 3 mittig durchquerenden Bordstein 5 sowie als zweites Begrenzungsobjekt 6 einen vor der Parklücke 3 bereits abgestellten Personenkraftwagen und als drittes Begrenzungsobjekt 7 einen hinter der Parklücke 3 bereits abgestellten Personenkraftwagen.

Der Bereich der Parklücke 3 wird von einer Auswerteeinheit der Vorrichtung zur Unterstützung des Einparkvorgangs des Fahrzeugs 1 in mehrere Segmente S0 - S8, nämlich in eine Anordnung von 3 x 3 Segmenten, unterteilt. Für jedes der neun Segmente S0 - S8 wird von der Auswerteeinheit eine Zuordnung eines in einer Speichereinheit der vorgenannten Vorrichtung hinterlegten Begrenzungsobjekttyps zu einem in dem jeweiligen Segment erfassten Begrenzungsobjekt vorgenommen. Ein in der Speichereinheit hinterlegter Katalog von Begrenzungsobjekttypen hat in diesem Ausführungsbeispiel folgenden Inhalt, wobei jeweils einem Objekttyp eine der Kennziffern 0 - 7 zugeordnet ist:

| | | |
|---|---|---|
| Begrenzungsobjekt leer | = | 0 |
| Begrenzungsobjekt Personenkraftwagen | = | 1 |
| Begrenzungsobjekt Bordstein | = | 2 |
| Begrenzungsobjekt Motorrad | = | 3 |
| Begrenzungsobjekt Person | = | 4 |
| Begrenzungsobjekt runder Gegenstand | = | 5 |
| Begrenzungsobjekt Strauch | = | 6 |
| Begrenzungsobjekt Lastkraftwagen | = | 7 |

Es ist insbesondere darauf hinzuweisen, dass das Begrenzungsobjekt auch vom Objekttyp leer (entsprechend Kennziffer 0) sein kann, so dass jedem Segment ein Begrenzungsobjekttyp zugeordnet werden kann. Die Kennziffer 0 wird dann zugeordnet, wenn in dem jeweiligen Segment kein Begrenzungsobjekt vorhanden ist.

Die Zuordnung der Kennziffern zu den einzelnen Segmenten ist in Figur 2 in einer Matrix M veranschaulicht. Der Inhalt der Matrix M kann mit einer Ziffernfolge [2 1 1 0 0 0 0 0 0], die das in der Einparksituation nach Figur 2 vorliegende, tatsächliche Parklückenmuster angibt, als Ist-Zustand der hier vorliegenden Einparksituation wiedergegeben werden.

Das tatsächliche Parklückenmuster wird mit zulässigen, in der Speichereinheit in einer Nachschlagetabelle, für die eine andere gebräuchliche Bezeichnung Look-Up Table ist, hinterlegten Parklückenmustern verglichen. Die Nachschlagetabelle hat in diesem Beispiel folgenden Inhalt:
[0 1 1 0 0 0 0 0 0]
[0 1 3 0 0 0 0 0 0]
...
[2 1 1 0 0 0 0 0 0]
...
[2 5 1 0 0 0 0 0 0]
...
[2 5 5 2 0 0 0 0 0]
[2 5 5 2 0 0 2 2 2]

Es ist zu erkennen, dass das tatsächliche Parklückenmuster einem der zulässigen Parklückenmuster entspricht. Infolgedessen generiert die Auswerteeinheit der Vorrichtung zur Unterstützung eines Einparkvorgangs des Fahrzeugs 1 eine Einparkinformation, die eine Ausführbarkeit eines Einparkvorgangs in die Parklücke 3 besagt. In diesem Beispiel wird mithin von einer Zulässigkeit eines Überfahrens des Bordsteins 5 in dem zentralen Segment S0 des Bereichs der Parklücke 3 ausgegangen.

Grundsätzlich ist es denkbar, dass vor dem Erfassen der Parklücke 3 zumindest ein Teil eines zulässigen Parklückenmusters von einem Benutzer, insbesondere einem Fahrer, des Fahrzeugs 1 mittels eines Eingabemittels 20 (siehe Figur 1) der Vorrichtung zur Unterstützung eines Einparkvorgangs des Fahrzeugs 1 vorgegeben und in der Speichereinheit hinterlegt wird. Dabei hätte der Benutzer beispielsweise das in diesem Beispiel vorliegende Parklückenmuster von der Nachschlagetabelle entfernen können, um die Gefahr einer Beschädigung von Felgen seines Fahrzeugs 1 zu verringern.

Eine dritte Einparksituation zeigt Figur 3 in einer ähnlichen Darstellung wie Figur 2; bezüglich übereinstimmender Elemente wird auf die Beschreibung zu Figur 2 verwiesen. In Abweichung zu dem Beispiel nach Figur 2 ist in dem Beispiel nach Figur 3 in dem zentralen Segment S0 des Bereichs einer Parklücke 3 ein runder Gegenstand 24 angeordnet, und ein Bordstein 5 bildet eine seitliche Parklückenbegrenzung.

Der Katalog von Begrenzungsobjekttypen stimmt mit demjenigen des Ausführungsbeispiels nach Figur 2 überein. Das tatsächliche Parklückenmuster nach Figur 3 wird durch die Ziffernfolge [5 1 1 2 2 2 0 0 0] beschrieben. Die Nachschlagetabelle hat folgenden Inhalt:
[0 1 1 0 0 0 0 0 0]
[0 1 3 0 0 0 0 0 0]
...
[0 5 1 0 0 0 0 0 0]
...
[2 1 1 0 0 0 0 0 0]
...
[2 5 5 2 0 0 0 0 0]
[2 5 5 2 0 0 2 2 2]

Das tatsächliche Parklückenmuster ist hier nicht in der Nachschlagetabelle enthalten. Die Auswerteeinheit generiert eine Einparkinformation, die besagt, dass ein Einparken in die Parklücke 3 nicht möglich ist.

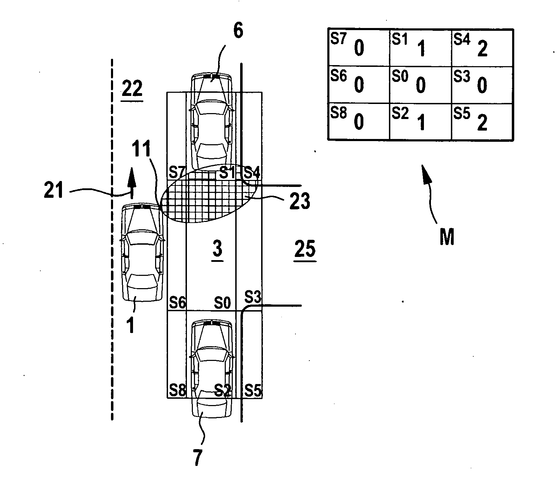

Eine vierte Einparksituation zeigt Figur 4 in einer ähnlichen Darstellung wie die beiden vorhergehenden Figuren 2, 3; bezüglich übereinstimmender Elemente wird auf die Beschreibung zu diesen Figuren 2, 3 verwiesen.

In dem Beispiel nach Figur 4 befindet sich auf Höhe einer Parklücke 3 eine Einmündung 25. Der Katalog von Begrenzungsobjekttypen stimmt mit demjenigen der Ausführungsbeispiele nach Figuren 2, 3 überein. Das tatsächliche Parklückenmuster nach Figur 4 wird durch die Ziffernfolge [0 1 1 0 2 2 0 0 0] beschrieben. Die Nachschlagetabelle hat folgenden Inhalt:
[0 1 1 0 0 0 0 0 0]
[0 1 3 0 0 0 0 0 0]
...
[0 5 1 0 0 0 0 0 0]
...
[2 1 1 0 0 0 0 0 0]
...
[2 5 5 2 0 0 0 0 0]
[2 5 5 2 0 0 2 2 2]

Auch bei diesem Ausführungsbeispiel ist das tatsächliche Parklückenmuster nicht in der Nachschlagetabelle enthalten. Die Auswerteeinheit generiert eine Einparkinformation, die besagt, dass ein Einparken in die Parklücke 3 nicht möglich ist. Damit wird ein den Verkehrsfluss behinderndes Einparken des Fahrzeugs 1 in der Parklücke 3 vermieden. Insbesondere wird aber - wie auch in dem Beispiel nach Figur 3 - ein Fahrer des Fahrzeugs 1 entlastet, da er von einer in das Fahrzeug 1 eingebauten Vorrichtung zur Unterstützung eines Einparkvorgangs nicht mit überflüssigen Informationen zu einer aufgrund ihrer geometrischen Abmessungen vermeintlich zum Einparken geeigneten Parklücke 3 überflutet wird, welche Parklücke 3 er dann selbst als ungeeignet erkennen und unberücksichtigt lassen muss; mit der oben beschriebenen Generierung einer Einparkinformation, die Typ und Lage von Begrenzungsobjekten berücksichtigt, wird somit eine unnötige Ablenkung des Fahrers vermieden.

## Patentansprüche

1. Verfahren zur Unterstützung eines Einparkvorgangs eines Fahrzeugs, insbesondere eines Kraftfahrzeugs, in eine Parklücke, wobei während eines Vorbeifahrens des Fahrzeugs an der Parklücke die Parklücke und ein im Bereich der Parklücke angeordnetes Begrenzungsobjekt mittels einer Sensoranordnung erfasst werden, **dadurch gekennzeichnet, dass** dem erfassten Begrenzungsobjekt (4; 6; 7) ein Begrenzungsobjekttyp zugeordnet wird und dass in Abhängigkeit von dem zugeordneten Begrenzungsobjekttyp und einer Lage des Begrenzungsobjektes (4; 6; 7) im Bereich der Parklücke (3) eine Einparkinformation bezüglich einer Ausführbarkeit eines Einparkvorgangs in die Parklücke (3) generiert wird, wobei ausgehend von der Einparkinformation eine Einparkbahn (18) in die Parklücke (3) bestimmt wird.

2. Verfahren nach Anspruch 1, **dadurch gekennzeichnet, dass** der Bereich der Parklücke (3) in mehrere Segmente (S0 - S8) unterteilt wird und dass für jedes Segment (S0; S1; S2; S3; S4; S5; S6; S7; S8) eine Zuordnung eines Begrenzungsobjekttyps zu einem in dem Segment (S0; S1; S2; S3; S4; S5; S6; S7; S8) erfassten Begrenzungsobjekt (4; 6; 7) erfolgt.

3. Verfahren nach Anspruch 2, **dadurch gekennzeichnet, dass** der Bereich der Parklücke (3) in eine Anordnung von 3 x 3 Segmenten (S0 - S8) unterteilt wird.

4. Verfahren nach Anspruch 2 oder 3, **dadurch gekennzeichnet, dass** ein alle Segmente (S0 - S8) mit jeweils zugeordnetem Begrenzungsobjekttyp umfassendes Parklückenmuster der Parklücke (3) mit zulässigen Parklückenmustern verglichen wird und dass in Abhängigkeit des Vergleichs des Parklückenmusters mit den zulässigen Parklückenmustern die Einparkinformation generiert wird.

5. Verfahren nach einem der Ansprüche 2 bis 4, **dadurch** gekennzeichet, dass ein alle Segmente (S0 - S8) mit jeweils zugeordnetem Begrenzungsobjekttyp umfassendes Parklückenmuster der Parklücke (3) mit zulässigen Relationen von Begrenzungsobjekttypen mehrerer im Bereich der Parklücke (3) erfasster Begrenzungsobjekte (4; 6; 7) zueinander verglichen wird und dass in Abhängigkeit des Vergleichs des Parklückenmusters mit den zulässigen Relationen von Begrenzungsobjekttypen die Einparkinformation generiert wird.

6. Verfahren nach einem der vorhergehenden Ansprüche, **dadurch gekennzeichnet, dass** vor dem Erfassen der Parklücke (3) zumindest ein Teil eines zulässigen Parklückenmusters von einem Benutzer des Fahrzeugs (1) vorgegeben wird.

7. Verfahren nach einem der vorhergehenden Ansprüche, **dadurch gekennzeichnet, dass** die Einparkinformation dem Benutzer des Fahrzeugs (1) übermittelt wird.

8. Vorrichtung, insbesondere zur Ausführung eines Verfahrens nach einem der vorhergehenden Ansprüche, zur Unterstützung eines Einparkvorgangs eines Fahrzeugs, insbesondere für ein Kraftfahrzeug, in eine Parklücke mit einer Sensoranordnung zum Erfassen einer Parklücke und eines im Bereich der Parklücke angeordneten Begrenzungsobjektes bei einem Vorbeifahren des Fahrzeugs an der Parklücke, mit einer mit der Sensoranordnung verbundenen Auswerteeinheit und mit einer Speichereinheit, **dadurch gekennzeichnet, dass** in der Speichereinheit (14) Begrenzungsobjekttypen hinterlegt sind und dass mittels der Auswerteeinheit (13) eine Einparkinformation bezüglich einer Ausführbarkeit eines Einparkvorgangs in die Parklücke (3) in Abhängigkeit von einer Zuordnung eines der hinterlegten Begrenzungsobjekttypen zu dem erfassten Begrenzungsobjekt (4; 6; 7) und von einer Lage des Begrenzungsobjektes (4; 6; 7) im Bereich der Parklücke (3) generierbar ist, wobei ausgehend von der Einparkinformation eine Einparkbahn (18) in die Parklücke (3) bestimmbar ist.

9. Vorrichtung nach Anspruch 8, **dadurch gekennzeichnet, dass** ein Eingabemittel (20) zur Eingabe zumindest eines Teils eines zulässigen Parklückenmusters in die Speichereinheit (14) durch einen Benutzer des Fahrzeugs (1) vorgesehen ist.

10. Vorrichtung nach Anspruch 8 oder 9, **dadurch gekennzeichnet, dass** ein Ausgabemittel (15) zur Übermittlung der Einparkinformation an den Benutzer des Fahrzeugs (1) vorgesehen ist.

11. Vorrichtung nach einem der Ansprüche 8 bis 10, **dadurch gekennzeichnet, dass** die Sensoranordnung (8) zumindest einen abstandsmessenden Sensor (9; 10; 11; 12) aufweist.

## Claims

1. Method for providing assistance during a parking manoeuvre of a vehicle, in particular of a motor vehicle, into a parking space, wherein while the vehicle is travelling past the parking space the parking space and a boundary object arranged in the region of the parking space are detected by means of a sensor arrangement, **characterized in that** a boundary object type is assigned to the detected boundary object (4; 6; 7), and **in that** parking information relating to a possibility of executing a parking manoeuvre into the parking space (3) is generated as a function of the assigned boundary object type and a position of the boundary object (4; 6; 7) in the region of the parking space (3), wherein a parking path (18) into the parking space (3) is determined on the basis of the parking information.

2. Method according to Claim 1, **characterized in that** the region of the parking space (3) is divided into a plurality of segments (S0-S8), and **in that** a boundary object type is assigned to a boundary object (4 ; 6; 7) detected in the segment (S0; S1; S2; S3; S4; S5; S6; S7; S8) for each segment (S0; S1; S2; S3; S4; S5; S6; S7; S8) .

3. Method according to Claim 2, **characterized in that** the region of the parking space (3) is divided into an arrangement of 3 x 3 segments (SO-S8).

4. Method according to Claim 2 or 3, **characterized in that** a parking space pattern, comprising all the segments (S0-S8) with respectively assigned boundary object types, of the parking space (3) is compared with permissible parking space patterns, and **in that** the parking information is generated as a function of the comparison of the parking space pattern with the permissible parking space patterns.

5. Method according to one of Claims 2 to 4, **characterized in that** a parking space pattern, comprising all the segments (S0-S8) with respectively assigned boundary object types, of the parking space (3) is compared with permissible relations between boundary object types of a plurality of boundary objects (4; 6; 7) which are detected in the region of the parking space (3), and **in that** the parking information is generated as a function of the comparison of the parking space pattern with the permissible relations between boundary object types.

6. Method according to one of the preceding claims, **characterized in that** before the parking space (3) is detected, at least part of a permissible parking space pattern is predefined by a user of the vehicle (1).

7. Method according to one of the preceding claims, **characterized in that** the parking information is conveyed to the user of the vehicle (1).

8. Device, in particular for executing a method according to one of the preceding claims, for providing assistance during a parking manoeuvre of a vehicle, in particular for a motor vehicle, into a parking space, with a sensor arrangement for detecting a parking space and a boundary object which is arranged in the region of the parking space, when the vehicle drives past the parking space, with an evaluation unit which is connected to the sensor arrangement, and with a memory unit, **characterized in that** boundary object types are stored in the memory unit (14), and **in that** parking information relating to a possibility of executing a parking manoeuvre into the parking space (3) can be generated by means of the evaluation unit (13) as a function of an assignment of one of the stored boundary object types to the detected boundary object (4; 6; 7) and of a position of the boundary object (4; 6; 7) in the region of the parking space (3), wherein a parking path (18) into the parking space (3) can be detected on the basis of the parking information.

9. Device according to Claim 8, **characterized in that** an input means (20) for inputting at least part of a permissible parking space pattern into the memory unit (14) is provided by a user of the vehicle (1).

10. Device according to Claim 8 or 9, **characterized in that** an output means (15) for conveying the parking information to the user of the vehicle (1) is provided.

11. Device according to one of Claims 8 to 10, **characterized in that** the sensor arrangement (8) has at least one distance-measuring sensor (9; 10; 11; 12).

## Revendications

1. Procédé d'assistance à une manoeuvre de stationnement d'un véhicule, en particulier d'un véhicule automobile, dans un emplacement de stationnement, dans lequel pendant que le véhicule se déplace devant l'emplacement de stationnement, l'emplacement de stationnement et un objet qui délimite l'emplacement de stationnement situé dans la zone occupée par l'emplacement de stationnement sont détectés au moyen d'un ensemble de détecteurs, **caractérisé en ce que**
l'objet détecté (4; 6; 7) délimitant l'emplacement de stationnement est associé à un type d'objet délimitant un emplacement de stationnement,
et **en ce qu'**en fonction du type d'objet délimitant l'emplacement de stationnement associé et d'une position de l'objet (4; 6; 7) délimitant l'emplacement de stationnement dans la zone occupée par l'emplacement de stationnement (3), une information de stationnement qui concerne une possibilité d'exécuter une manoeuvre de stationnement dans l'emplacement de stationnement (3) est produite, un parcours de stationnement (18) jusque dans l'emplacement de stationnement (3) étant déterminé à partir de cette information de stationnement.

2. Procédé selon la revendication 1, **caractérisé en ce que** la zone occupée par l'emplacement de stationnement (3) est divisée en plusieurs segments (SO-S8) et **en ce que** pour chaque segment (S0; S1; S2; S3; S4; S5; S6; S7; S8), une association est réalisée entre un type d'objet délimitant l'emplacement de stationnement et un objet (4; 6; 7) délimitant l'emplacement de stationnement détecté dans le segment (S0; S1; S2; S3; S4; S5; S6; S7; S8).

3. Procédé selon la revendication 2, **caractérisé en ce que** la zone occupée par l'emplacement de stationnement (3) est divisée en un agencement de 3 X 3 segments (S0-S8).

4. Procédé selon la revendication 2 ou 3, **caractérisé en ce qu'**un motif de l'emplacement de stationnement (3) qui contient tous les segments (S0-S8) et les types d'objets délimitant l'emplacement de stationnement qui leur sont associés est comparé à des motifs admissibles d'emplacements de stationnement et **en ce qu'**une information de manoeuvre de stationnement est produite en fonction de la comparaison du motif d'emplacement de stationnement et des motifs admissibles d'emplacements de stationnement.

5. Procédé selon l'une des revendications 2 à 4, **caractérisé en ce qu'**un motif de l'emplacement de stationnement (3) qui comprend tous les segments (S0-S8) et les types d'objets délimitant l'emplacement de stationnement qui leur sont associés est comparé à des relations admissibles entre les types d'objets délimitant l'emplacement de stationnement de plusieurs objets (4; 6; 7) délimitant l'emplacement de stationnement détectés dans la zone de l'emplacement de stationnement (3) et **en ce que** l'information de manoeuvre de stationnement est produite en fonction de la comparaison du motif d'emplacement de stationnement et des relations admissibles entre les types d'objets délimitant l'emplacement de stationnement.

6. Procédé selon l'une des revendications précédentes, **caractérisé en qu'**avant la détection de l'emplacement de stationnement (3), au moins une partie d'un motif admissible d'emplacement de stationnement est prédéterminée par un utilisateur du véhicule (1).

7. Procédé selon l'une des revendications précédentes, **caractérisé en ce que** l'information de manoeuvre de stationnement est transmise à l'utilisateur du véhicule (1).

8. Dispositif selon l'une des revendications précédentes, en particulier en vue de l'exécution d'un procédé d'assistance à une manoeuvre de stationnement d'un véhicule et en particulier d'un véhicule automobile dans un emplacement de stationnement, qui comprend
un ensemble de détection qui détecte un emplacement de stationnement et un objet délimitant l'emplacement de stationnement situé dans la zone occupée par l'emplacement de stationnement pendant que le véhicule se déplace le long de l'emplacement de stationnement, une unité d'évaluation reliée à l'ensemble de détection et une unité de mémoire, **caractérisé en ce que**
des types d'objets délimitant l'emplacement de stationnement sont conservés en mémoire dans l'unité de mémoire (14),
et **en ce qu'**à l'aide de l'unité d'évaluation (13), une information de manoeuvre de stationnement qui concerne une possibilité d'exécuter une manoeuvre de stationnement dans l'emplacement de stationnement (3) peut être produite sur la base d'une association entre un des types d'objets délimitant un emplacement de stationnement conservés en mémoire, l'objet (4; 6; 7) délimitant l'emplacement de stationnement qui a été détecté et d'une position de l'objet (4; 6; 7) délimitant l'emplacement de stationnement dans la zone occupée par l'emplacement de stationnement (3), un parcours (18) de manoeuvre de stationnement dans l'emplacement de stationnement (3) pouvant être déterminé à partir de l'information de manoeuvre de stationnement.

9. Dispositif selon la revendication 8, **caractérisé en ce qu'**il présente un moyen d'introduction (20) qui permet d'introduire au moins une partie d'un motif admissible d'emplacement de stationnement dans l'unité de mémoire (14) par un utilisateur du véhicule (1).

10. Dispositif selon la revendication 8 ou 9, **caractérisé en ce qu'**il présente un moyen de sortie (15) qui transmet l'information de manoeuvre de stationnement à l'utilisateur du véhicule (1).

11. Dispositif selon l'une des revendications 8 à 10, **caractérisé en ce que** l'ensemble de détection (8) présente au moins un détecteur (9; 10; 11; 12) de mesure de distance.
